# EUROPEAN PATENT APPLICATION

(11) **EP 0 725 331 A1**
(43) Date of publication of application: **07.08.1996**
(21) Application number: 95402255.4
(22) Date of filing: 09.10.1995
(51) Int. Cl.: G06F 3/033

(54) **Information imput/output device using touch panel**

(30) Priority: 04.02.1995 KR 9502015; 09.02.1995 KR 9501992
(71) Applicant: L G ELECTRONICS INC., Seoul (KR)
(72) Inventor: Kwon, Sung Tae, Songpa-Ku, Seoul (KR)
(74) Representative: Fort, Jacques

(57) **Abstract**

An information input/output device comprising a touch panel for displaying key patterns of keyboards with various layouts and forms and a virtual mouse thereon to perform data input and command process when the key patterns and virtual mouse displayed thereon are touched by the user, a signal detector for detecting infrared signals which are generated from the touch panel when the key patterns and virtual mouse displayed on the touch panel are touched by the user, a position detector for detecting x-y coordinates of a position on the touch panel touched by the user in response to the output of the signal detector, a control circuit responsive to the x-y coordinates detected by the position detector, for controlling the display of the key patterns, the virtual mouse and output video information on the touch panel according to a set one of a plurality of modes, and a touch panel driver for driving the touch panel under the control of the control circuit to display the key patterns, virtual mouse and output video information thereon. The plurality of modes include a keyboard display mode, a video display mode and a mouse mode.

## Description

### BACKGROUND OF THE INVENTION

### Field of the Invention

The present invention relates in general to portable, small personal information equipment, and more particularly to an information input/output device using a touch panel in which a key pattern of a keyboard and a virtual mouse are displayed on the touch panel, information is inputted by touching the key pattern, and a mouse operation is performed when the user picks up the virtual mouse with his hand and moves it on the touch panel or touches buttons of the virtual mouse.

### Description of the Prior Art

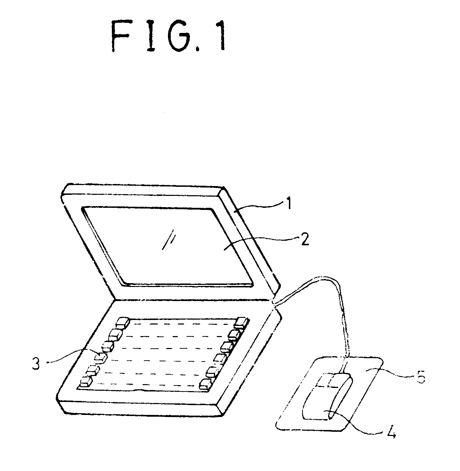

Referring to Fig. 1, there is shown a schematic perspective view of a conventional portable, small personal information unit, such as a notebook computer, which is designated by the reference numeral 1. As shown in this drawing, the notebook computer 1 comprises a keyboard 3 as data and command input means and a mouse 4 coupled with a computer body through a separate connector. The keyboard 3 includes a plurality of keys marked with corresponding characters, sines and functions. The mouse 4 runs on a mouse pad 5 to move a cursor on a liquid crystal display (referred to hereinafter as LCD) 2 or it executes commands by having its buttons operated.

However, conventional portable, small personal information equipment such as notebook computers must comprise the mouse separately. For this reason, the mouse is difficult to carry and care for. Further, in the keyboard, one key may input at least two characters or more various characters such as, for example, English, Japanese, Korean and etc.. In this case, it is impossible to mark one key with all such characters. For the purpose of providing more various functions by countries, companies and models, it is required to individually design keyboards with new and various character marks. Moreover, when video information to be outputted is large in amount, it must be divided into two or three unit pictures for the display thereof on the LCD because of a limited size of the LCD. For this reason, the information cannot be obviously viewed.

### SUMMARY OF THE INVENTION

Therefore, the present invention has been made in view of the above problems, and it is an object of the present invention to provide an information input/output device using a touch panel in which key patterns of keyboards with various layouts, forms and functions are displayed on the touch panel, a desired one of the displayed key patterns is selected and touched for data input and command execution, a virtual mouse is displayed on the touch panel, a mouse operation is performed when the user picks up the virtual mouse with his hand and moves it on the touch panel or touches buttons of the virtual mouse, and the touch panel is used as video information output means, thereby solving limitations in character marks and layouts of conventional keyboards, overcoming inconveniences in the carrying and care of conventional mouses and being capable of displaying various video information on an extended screen.

In accordance with the present invention, the above and other objects can be accomplished by a provision of an information input/output device comprising a touch panel for displaying key patterns of keyboards with various layouts and forms and a virtual mouse thereon to perform data input and command process when the key patterns and virtual mouse displayed thereon are touched by the user; signal detection means for detecting infrared signals which are generated from said touch panel when the key patterns and virtual mouse displayed on said touch panel are touched by the user; position detection means for detecting x-y coordinates of a position on said touch panel touched by the user in response to the output of said signal detection means; control means responsive to the x-y coordinates detected by said position detection means, for controlling the display of the key patterns, the virtual mouse and output video information on said touch panel according to a set one of a plurality of modes; and touch panel drive means for driving said touch panel under the control of said control means to display the key patterns, virtual mouse and output video information thereon.

### BRIEF DESCRIPTION OF THE DRAWINGS

The above and other objects, features and advantages of the present invention will be more clearly understood from the following detailed description taken in conjunction with the accompanying drawings, in which:
Fig. 1 is a schematic perspective view of a conventional portable, small personal information unit;
Fig. 2 is a block diagram of an information input/output device using a touch panel in accordance with the present invention;
Fig. 3A is a perspective view illustrating how the information input/output device in Fig. 2 is applied to a notebook computer in accordance with a first embodiment of the present invention;
Fig. 3B is a perspective view illustrating how the information input/output device in Fig. 2 is applied to the notebook computer in accordance with a second embodiment of the present invention;
Fig. 4A is a perspective view illustrating how the information input/output device in Fig. 2 is applied to the notebook computer in accordance with a third embodiment of the present invention;
Fig. 4B is a perspective view illustrating how the information input/output device in Fig. 2 is applied to the notebook computer in accordance with a fourth embodiment of the present invention; and
Fig. 5 is a detailed view of a virtual mouse in accordance with the present invention.

### DETAILED DESCRIPTION OF THE PREFERRED EMBODIMENTS

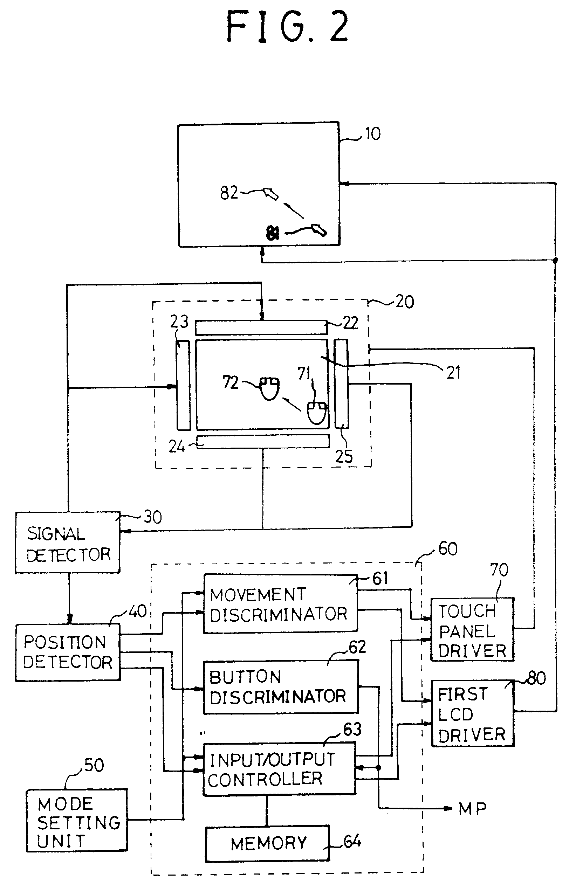

Referring to Fig. 2, there is shown a block diagram of an information input/output device using a touch panel in accordance with the present invention. As shown in this drawing, the information input/output device comprises a first LCD 10 for displaying output video information and a cursor thereon.

The touch panel, designated by the reference numeral 20, is used to display key patterns of keyboards with various layouts and forms and a virtual mouse thereon. The touch panel 20 performs data input and command process when the key patterns and virtual mouse displayed thereon are touched by the user.

The information input/output device further comprises a signal detector 30 for detecting infrared signals which are generated from the touch panel 20 when the key patterns and virtual mouse displayed on the touch panel 20 are touched by the user, a position detector 40 for detecting x-y coordinates of a position on the touch panel 20 touched by the user in response to the output of the signal detector 30, a mode setting unit 50 for setting a keyboard display mode, a video display mode and a mouse mode according to a user's selection, and a control circuit 60 for discriminating a key of the touched position and whether buttons of the virtual mouse have been touched by the user, in response to the x-y coordinates detected by the position detector 40, and outputting the discriminated result to a microprocessor MP. The control circuit 60 also controls the display of the key patterns, virtual mouse and output video information on the touch panel 20 and the display of the output video information and cursor on the first LCD 10.

The information input/output device further comprises a touch panel driver 70 for driving the touch panel 20 under the control of the control circuit 60 to display the key patterns, virtual mouse and output video information thereon, and a first LCD driver 80 for driving the first LCD 10 under the control of the control circuit 60 to display the output video information and cursor thereon.

The touch panel 20 includes a second LCD 21 for displaying the key patterns, virtual mouse and output video information thereon, a first transmitter 22 for generating the infrared signal for the detection of the x-coordinate, a second transmitter 23 for generating the infrared signal for the detection of the y-coordinate, a first receiver 24 for receiving the infrared signal from the first transmitter 22, and a second receiver 25 for receiving the infrared signal from the second transmitter 23.

The control circuit 60 includes a movement discriminator 61 for discriminating present and moved positions of the virtual mouse in response to the x-y coordinates detected by the position detector 40, a button discriminator 62 for discriminating whether the buttons of the virtual mouse have been touched by the user, in response to the x-y coordinates detected by the position detector 40, and outputting the discriminated result to the microprocessor MP, and an input/output controller 63 for discriminating the key of the touched position in response to the x-y coordinates detected by the position detector 40 and outputting the resultant key input command to the microprocessor MP. The input/output controller 63 also inputs the output video information processed by the microprocessor MP and controls the touch panel driver 70 and the first LCD driver 80 in response thereto.

The control circuit 60 further comprises a memory 64 for storing the key patterns of the keyboards with the various layouts and forms and the corresponding position information therein.

The operation of the information input/output device with the above-mentioned construction in accordance with the present invention will hereinafter be described in detail.

The keyboard display mode is defined as displaying the key patterns on the touch panel 20 and using the touch panel 20 as the keyboard. The video display mode is defined as using the touch panel 20 with the first LCD 10 as video display means. The mouse mode is defined as displaying the virtual mouse on the touch panel 20.

The keyboard display mode is automatically set at the beginning of a booting operation. In this case, the key patterns of the keyboards with the various layouts and forms are applied from the memory 64 in the control circuit 60 to the second LCD 21 in the touch panel 20 and displayed thereon. A desired one of the displayed key patterns is touched by the user and displayed on the second LCD 21. A video display mode button is displayed on a desired position of the displayed key pattern so that it can be touched by the user to set the video display mode. The video display mode can also be set by the mode setting unit 50.

First, when the keyboard display mode is initially set automatically or set by the mode setting unit 50, the input/output controller 63 in the control circuit 60 reads the key patterns of the keyboards with the various layouts and forms stored in the memory 64 and controls the touch panel driver 70 to display the read key patterns on the second LCD 21 in the touch panel 20.

When the desired key pattern is touched by the user, the first and second transmitters 22 and 23 in the touch panel 20 are driven by the signal detector 30 to generate the infrared signals, which are received by the first and second receivers 24 and 25, respectively. The infrared signals from the first and second receivers 24 and 25 are detected by the signal detector 30 and supplied to the position detector 40.

The position detector 40 detects the x-y coordinates of the touched key pattern position in response to the output of the signal detector 30 and supplies the detected result to the control circuit 60. Then in the control circuit 60, the input/output controller 63 compares the detected result from the position detector 40 with the position information of the various key patterns stored in the memory 64 to determine which one of the key patterns in the memory 64 has been touched. The input/output controller 63 then supplies the determined result to the microprocessor MP. The input/output controller 63 also controls the touch panel driver 70 to display the selected key pattern on the second LCD 21 in the touch panel 20.

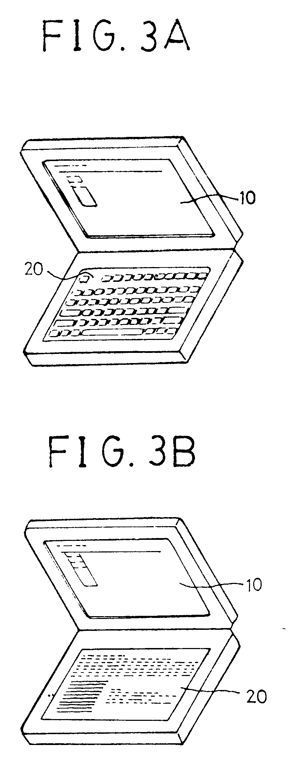

Fig. 3A is a perspective view illustrating how the information input/output device in Fig. 2 is applied to a notebook computer in accordance with a first embodiment of the present invention. In this embodiment, a selected key pattern can be displayed on the second LCD 21 in the touch panel 20. The user can touch a desired key on the touch panel 20 for data input and command execution.

When a desired key on the touch panel 20 is touched by the user, the first and second transmitters 22 and 23 in the touch panel 20 are driven by the signal detector 30 to generate the infrared signals. The first and second receivers 24 and 25 receive the infrared signals from the first and second transmitters 22 and 23, respectively. The infrared signals received by the first and second receivers 24 and 25 are detected by the signal detector 30 and supplied to the position detector 40.

The position detector 40 detects the x-y coordinates of the touched key position in response to the output of the signal detector 30 and supplies the detected result to the control circuit 60. Then in the control circuit 60, the input/output controller 63 compares the detected result from the position detector 40 with the key position information of the selected key pattern stored in the memory 64 to determine which key of the selected key pattern in the memory 64 has been touched. The input/output controller 63 then supplies the resultant key input command to the microprocessor MP which analyzes it to perform the corresponding work.

In this manner, the user can use the touch panel 20 as the keyboard and touch the key pattern displayed on the second LCD 21 therein to perform a sequence of works.

Thereafter, when the video display mode is set by the mode setting unit 50 or by the user touching the video display mode button displayed on a desired position of the selected key pattern, the input/output controller 63 in the control circuit 60 determines the present mode as the video display mode. In this case, the input/output controller 63 controls the touch panel driver 70 to erase the key pattern displayed on the second LCD 21 in the touch panel 20. Also, the input/output controller 63 inputs the video information from the microprocessor MP and controls the touch panel driver 70 to display the inputted video information on the second LCD 21 in the touch panel 20.

Fig. 3B is a perspective view illustrating how the information input/output device in Fig. 2 is applied to the notebook computer in accordance with a second embodiment of the present invention. In this embodiment, the video information from the microprocessor MP can be displayed on the second LCD 21 in the touch panel 20 as well as the first LCD 10. This has the effect of providing an extended screen area.

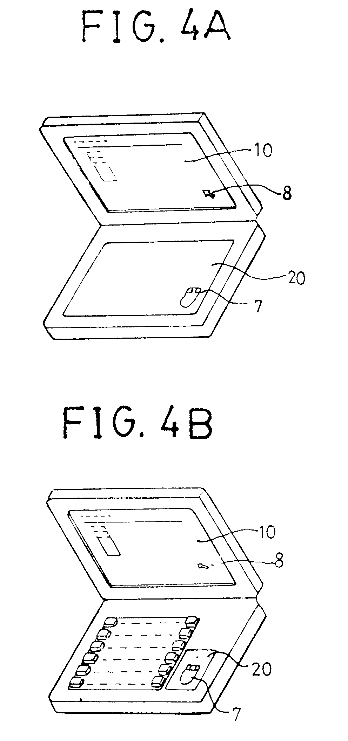

Fig. 4A is a perspective view illustrating how the information input/output device in Fig. 2 is applied to the notebook computer in accordance with a third embodiment of the present invention. A "mouse execution button" is automatically displayed on a desired position of the second LCD 21 in the touch panel 20 at the beginning of the booting operation. When the user would like to perform a mouse operation, he can set the mouse mode by touching the mouse execution button with his hand or using the mode setting unit 50.

If the mouse mode is set in the above manner, the movement discriminator 61 in the control circuit 60 determines the present mode as the mouse mode and controls the touch panel driver 70 to display an initial picture of the virtual mouse on the second LCD 21 in the touch panel 20. The movement discriminator 61 also controls the first LCD driver 80 to display the cursor on a position 81 of the first LCD 10 corresponding to the initial virtual mouse position 71 on the second LCD 21 in the touch panel 20.

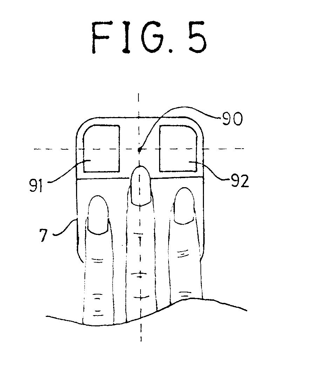

The initial virtual mouse picture is displayed on the right-side lower portion 71 of the second LCD 21 and has left and right button regions 91 and 92 spaced apart from a central reference point 90 by a predetermined distance, as shown in Fig. 5. The mouse operation is performed when the user picks up the virtual mouse with his hand and moves it on the touch panel 20 or touches the button regions 91 and 92 of the virtual mouse.

When the user picks up the virtual mouse with his hand and moves it on the second LCD 21 in the touch panel 20 from the initial position 71 to a desired position 72, the first and second transmitters 22 and 23 in the touch panel 20 are driven by the signal detector 30 to generate the infrared signals, which are received by the first and second receivers 24 and 25, respectively. The infrared signals from the first and second receivers 24 and 25 are detected by the signal detector 30 and supplied to the position detector 40.

The position detector 40 detects the x-y coordinates of the touched position in response to the output of the signal detector 30 and supplies the detected result to the control circuit 60. Then in the control circuit 60, the movement discriminator 61 compares the detected coordinates from the position detector 40 with the previous coordinates to determine whether the virtual mouse has been moved.

If the detected coordinates from the position detector 40 are the same as the previous coordinates, the movement discriminator 61 determines that the virtual mouse has not been moved. In this case, the movement discriminator 61 controls the touch panel driver 70 to continue to display the initial virtual mouse picture as shown in Fig. 5 on the right-side lower portion 71 of the second LCD 21 in the touch panel 20. On the other hand, when the detected coordinates from the position detector 40 are not the same as the previous coordinates, the movement discriminator 61 determines that the virtual mouse has been moved. In this case, the movement discriminator 61 controls the touch panel driver 70 to display the virtual mouse on the new position 72 of the second LCD 21 in the touch panel 20.

The movement discriminator 61 also controls the first LCD driver 80 to display the cursor on a position 82 of the first LCD 10 corresponding to the new position 72 on the second LCD 21 in the touch panel 20.

When the button regions 91 and 92 of the virtual mouse are touched by the user under such a condition, the first and second transmitters 22 and 23 in the touch panel 20 are driven by the signal detector 30 to generate the infrared signals, which are received by the first and second receivers 24 and 25, respectively. The infrared signals from the first and second receivers 24 and 25 are detected by the signal detector 30 and supplied to the position detector 40.

The position detector 40 detects the x-y coordinates of the touched position in response to the output of the signal detector 30 and supplies the detected result to the control circuit 60. Then in the control circuit 60, the button discriminator 62 discriminates the x-y coordinates detected by the position detector 40 and outputs the discriminated result to the microprocessor MP. In this case, the output signal from the button discriminator 62 is the same as a signal generated when the actual mouse buttons are operated. The microprocessor MP analyzes the output signal from the button discriminator 62 and performs a control operation in accordance with the analyzed result.

On the other hand, when the user would like to stop the mouse operation, he can accomplish it by touching the mouse execution button with his hand or using the mode setting unit 50 to apply a mouse mode release signal to the control circuit 60. In response to the mouse mode release signal, the control circuit 60 controls the touch panel driver 70 and the first LCD driver 80 to release the mouse mode.

As apparent from the above description, according to the present invention, the key patterns of the keyboards with various layouts, forms and functions are displayed on the touch panel and a desired one thereof is selected and touched for the data input and command execution. The virtual mouse is displayed on the touch panel and the mouse operation is performed when the user picks up the virtual mouse with his hand and moves it on the touch panel or touches the buttons of the virtual mouse. Therefore, the present invention is capable of solving limitations in character marks and layouts of conventional keyboards and overcoming inconveniences in the carrying and care of conventional mouses. Further, the touch panel is used as the video information output means, so that various video information can be displayed on the extended screen.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An information input/output device comprising:
a touch panel for displaying key patterns of keyboards with various layouts and forms and a virtual mouse thereon to perform data input and command process when the key patterns and virtual mouse displayed thereon are touched by the user;
signal detection means for detecting infrared signals which are generated from said touch panel when the key patterns and virtual mouse displayed on said touch panel are touched by the user;
position detection means for detecting x-y coordinates of a position on said touch panel touched by the user in response to the output of said signal detection means;
control means responsive to the x-y coordinates detected by said position detection means, for controlling the display of the key patterns, the virtual mouse and output video information on said touch panel according to a set one of a plurality of modes; and
touch panel drive means for driving said touch panel under the control of said control means to display the key patterns, virtual mouse and output video information thereon.

2. An information input/output device as set forth in Claim 1, further comprising:
a first LCD for displaying the output video information and a cursor thereon;
first LCD drive means for driving said first LCD under the control of said control means to display the output video information and cursor thereon; and
mode setting means for setting one of said plurality of modes according to a user's selection, said plurality of modes including a keyboard display mode, a video display mode and a mouse mode.

3. An information input/output device as set forth in Claim 1, wherein said plurality of modes include a keyboard display mode, a video display mode and a mouse mode, said keyboard display mode being automatically set at the beginning of a booting operation, said video display mode being set by the user touching a video display mode button displayed on a desired position of said touch panel during said keyboard display mode, said mouse mode being set by the user touching a mouse execution button displayed on a desired position of said touch panel at the beginning of the booting operation.

4. An information input/output device as set forth in Claim 3, wherein said plurality of modes are set by mode setting means.

5. An information input/output device as set forth in Claim 2, wherein said touch panel includes:
a second LCD for displaying the key patterns, virtual mouse and output video information thereon;
a first transmitter for generating the infrared signal for the detection of the x-coordinate;
a second transmitter for generating the infrared signal for the detection of the y-coordinate;
a first receiver for receiving the infrared signal from said first transmitter; and
a second receiver for receiving the infrared signal from said second transmitter.

6. An information input/output device as set forth in Claim 1, wherein said control means includes:
a movement discriminator for discriminating a moved position of the virtual mouse in response to the x-y coordinates detected by said position detection means, generating a control signal as a result of the discrimination and outputting the generated control signal to said touch panel drive means;
a button discriminator for discriminating whether buttons of the virtual mouse have been touched by the user, in response to the x-y coordinates detected by said position detection means, and outputting the discriminated result to a microprocessor;
an input/output controller for discriminating a key of the touched position in response to the x-y coordinates detected by said position detection means and outputting the resultant key input command to said microprocessor, said input/output controller inputting the output video information from said microprocessor, generating a control signal in response thereto and outputting the generated control signal to said touch panel drive means; and
a memory for storing the key patterns of the keyboards with the various layouts and forms and the corresponding position information therein.

7. An information input/output device as set forth in Claim 5, wherein said second LCD displays the output video information thereon with said first LCD in the video display mode.

8. An information input/output device as set forth in Claim 1, wherein said touch panel has an input function based on the touch of the user and an output function for outputting the output video information.

9. An information input/output device as set forth in Claim 2, wherein said mouse mode is performed when the virtual mouse is displayed on said touch panel and the user picks up the virtual mouse with his hand and moves it on said touch panel or touches buttons of the virtual mouse.
